**Europäisches Patentamt**

(19) **European Patent Office**

**Office européen des brevets**

(11) Publication number: **0 053 667**

**A1**

(12) # EUROPEAN PATENT APPLICATION

(21) Application number: **81108048.0**

(22) Date of filing: **07.10.81**

(51) Int. Cl.³: **B 62 K 21/16**

(30) Priority: **22.11.80 JP 165122/80**

(43) Date of publication of application:
**16.06.82 Bulletin 82/24**

(84) Designated Contracting States:
**DE**

(71) Applicant: **Yamaha Motor Co., Ltd.**
**2500 Shingai**
**Iwata-shi Shizuoka-ken(JP)**

(72) Inventor: **Maekawa, Ichiro**
**202-20 Toshin-cho**
**Iwata-shi Shizuoka-ken(JP)**

(72) Inventor: **Nakamichi, Shinobu**
**193 Uchino**
**Hamakita-shi Shizuoka-ken(JP)**

(72) Inventor: **Suzuki, Mitsugu**
**897 Futamata Futamata-cho**
**Tenryu-shi Shizuoka-ken(JP)**

(72) Inventor: **Fujio, Hiroshi**
**3450 Nishikaizuka**
**Iwata-shi Shizuoka-ken(JP)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) **Handlebars for 2-wheel and 3-wheel vehicles, in particular for motor cycles.**

(57) A steering handle for motor cycles and the like has two symmetrically formed handle levers, which each are constructed of a plurality of individual members, i.e., of an inner member ($a_1$, $a_1'$, $b$) which is connected to the front wheel fork and an outer member ($a_3$, $c$) which is grasped by the motor cycle rider. Normally, between said inner and outer members there is provided an intermediate member ($a_2$). The individual members are adjustably interconnected such that the mutual positional relationships of these members can be arbitrarily changed, whereby the rider can take any desired riding position in accordance with his physical constitution and individual taste.

Fig.2

EP 0 053 667 A1

EP 407 -22/mc

August 14, 1931

0053667

GRÜNECKER, KINKELDEY, STOCKMAIR & PARTNER

PATENTANWÄLTE
EUROPEAN PATENT ATTORNEYS

A. GRÜNECKER, DIPL-ING
DR. H. KINKELDEY, DIPL-ING
DR. W. STOCKMAIR, DIPL-ING, AE.E. (CALTECH)
DR. K. SCHUMANN, DIPL-PHYS.
P. H. JAKOB, DIPL-ING
DR. G. BEZOLD, DIPL-CHEM
W. MEISTER, DIPL-ING
H. HILGERS, DIPL-ING
DR. H. MEYER-PLATH, DIPL-ING

8000 MÜNCHEN 22
MAXIMILIANSTRASSE 43

## HANDLEBARS FOR 2-WHEEL AND 3-WHEEL VEHICLES, IN PARTICULAR FOR MOTOR CYCLES.

The invention relates to handlebars for bicycles and tricycles and in particular motor cycles.

Conventional handlebars (steering handles) for motor cycles and the like do not permit an adjustment thereof and hence do not permit arbitrarily setting of height, width, etc., of the handlebars. As a result, the major part of the riders has not the possibility to adjust the handlebars in accordance with their physical constitution and taste.

The invention as claimed, is intended to remedy these drawbacks and solves the problem of making it possible to arbitrarily change the width, height, etc., of the handlebars, so that a rider may take his desired riding position in accordance with his physical constitution and individual taste.

The advantages offered by the invention are mainly that the individual handlebar members are so connected with each other that their mutual positional relationships can be changed for adjusting the shape of the steering handle.

Three ways of carrying out the invention are described in detail below with reference to drawings which illustrate the three described embodiments of the invention, in which:

Figure 1 is a top plan view showing a first embodiment of the handle lever in accordance with the invention,

Figure 2 is a partially broken away front elevation of the embodiment shown in Figure 1,

Figure 3 is a side elevation of the embodiment as shown in Figures 1 and 2,

Figure 4 is a top plan view, showing a second embodiment,

Figure 5 is a partially broken away front elevation of the second embodiment,

Figure 6 is a partially broken away front elevation showing a third embodiment, and

Figure 7 is a top plan view of said third embodiment.

It is to be noted that the inventive handlebars are formed bi-symmetrical such that each of the two handle levers has an identical construction. Therefore, only one half of the steering handle is shown in the drawings.

The Figures show a handle lever (a), which comprises a plurality of individual members, i.e., an inner member $a_1$, an intermediate member $a_2$, and an outer member $a_3$, in the first embodiment, all of which are so connected that their mutual positional relationships can be changed.

The inner member $a_1$ is constructed of a pipe 1 and a connecting member 2, which is welded to the outer end of the pipe 1. The pipe 1 is attached to an upper bracket 3, which is used to connect a front wheel fork 4 at its upper end portion so that the aforementioned pipe 1 is attached to and held on a holding portion 3a, which is formed to project from the upper surface of the upper bracket 3, through a holding member 5.

This holding member 5 is fastened to the holding portion 3a by means of bolts 6 thereby to clamp the pipe 1 between the holding member 5 and the holding portion 3a.

As a result, if the bolts 6 are loosened, the clamp of the pipe 1 by the holding portion 5 is loosened so that the pipe 1 can be rotated back and forth.

Moreover, the inner member $a_1$ has its connecting member 2 connected to the intermediate member $a_2$.

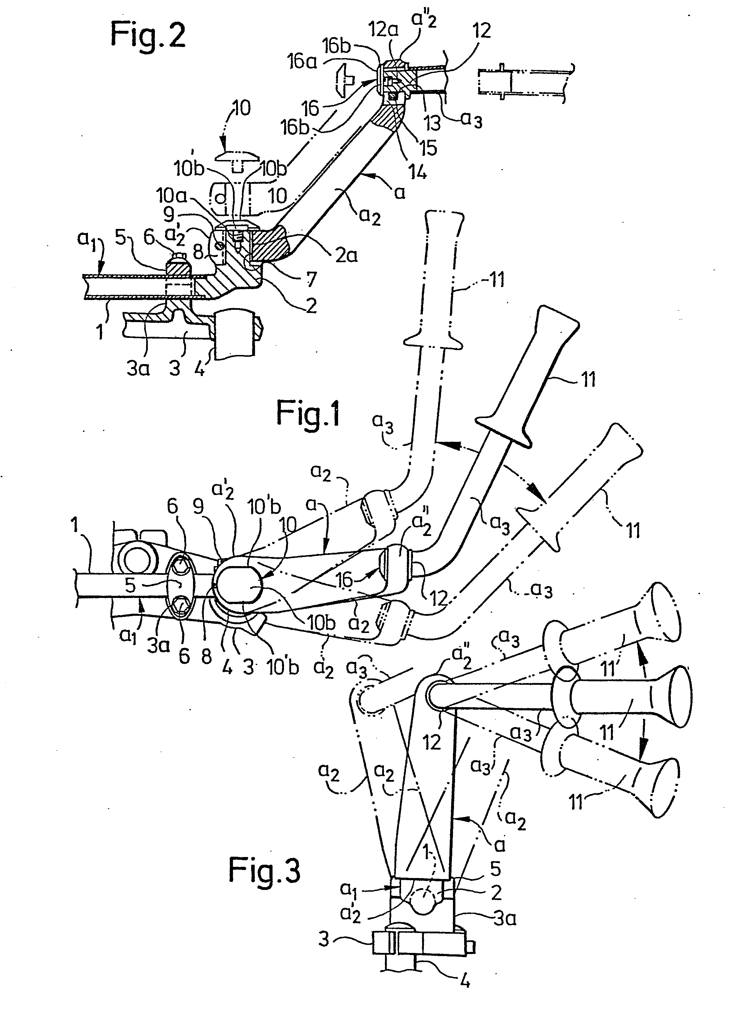

Reference numeral 2a (Fig. 2) indicates a serrated portion, which is formed in the first connecting member 2 in a manner to protrude in the vertical direction and to which the lower end of the intermediate member $a_2$ is connected in a fitted manner.

The intermediate member $a_2$ is made to obliquely rise to the outside from the inner member $a_1$ and to have its lower end, i.e., its base portion $a_2'$ formed with a fitting hole 7, in which the aforementioned serrated portion 2a is fitted.

The fitting hole 7 is formed with such grooves as fit therein the respective teeth of the serrated portion 2a and has its portion opened to the outside through a slit 8.

Reference numeral 9 indicates a bolt which is fastened to connect both the sides of the aforementioned slit 8, and the fitting hole 7 is narrowed by fastening that bolt 9 thereby to strengthen the connection between the

base portion $a_2'$ of the intermediate member $a_2$ and the first connecting member 2.

If, on the contrary, the bolt 9 is loosened, the aforementioned connection between the two members $a_2'$ and 2 is loosened.

Reference numeral 10 indicates a retaining member, which has its threaded portion 10a screwed in the serrated portion $2\underline{a}$ of the first connecting member 2 and its head portion $10\underline{b}$ engaging with the upper sides of the serrated portion $2\underline{a}$ and the base portion $a_2'$ of the intermediate member $a_2$ in a riding manner thereby to prevent the intermediate member $a_2$ from coming out of the first connecting member 2.

Reference numeral $10\underline{b}'$ indicates a retaining portion, which is cut and formed on the head portion $10\underline{b}$ of the aforementioned retaining member 10 and at which a tool is retained so that the retaining member can be rotated to attach or detach the first connecting member 2.

As a result, by removing the aforementioned retaining member 10 to loosen the bolt 9 and by pulling up the second intermediate member $a_2$, this member $a_2$ is removed from the first connecting member 2.

Then, by connecting again the base portion $a_2'$ of the intermediate member $a_2$ to the first connecting member 2 with the fitting position being made different from the initial state, the positional relationship of the intermediate member $a_2$ with the inner member $a_1$ is changed in a horizontal plane (Fig. 1).

On the other hand, the outer member $a_3$ is constructed of a pipe which is connected to the upper (outer) end of the intermediate member $a_2$ and which extends backward from the intermediate member $a_2$ at a predetermined

angle with respect to a horizontal plane.

Reference numeral 11 indicates a grip which is attached to the rear end of the outer member $a_3$ and which is gripped by the rider thereby to manipulate the handlebars.

Reference numeral 12 indicates a second connecting member, which is fixed to the inner end of the outer member $a_3$ and through which the outer member $a_3$ is connected to the intermediate member $a_2$.

The upper (outer) end of the intermediate member $a_2$, to which the second connecting member 12 is connected, is substantially vertically raised to form a rising portion $a_2''$, to which the second connecting member 12 is connected from the outside.

The connecting structure between the second connecting member 12 and the rising portion $a_2''$ adopts the serrated fitting similar to that between the base portion $a_2'$ of the intermediate member $a_2$ and the first connecting member 2 of the inner member $a_1$.

Reference numeral 12a indicates a serrated portion which is formed in the second connecting member 12, and reference numeral 13 indicates a fitting hole which is formed in the aforementioned rising portion $a_2''$ thereby to fit that serrated portion 12a therein.

The aforementioned fitting hole 13 is partially opened to the outside through a slit 13 similarly to the fitting hole 7 of the base portion $a_2'$ and has its diameter enlarged or reduced by means of a bolt 15 thereby to adjust its connected state to the serrated portion 12a.

Reference numeral 16 indicates a retaining member, which has its threaded portion 16a fastened to the second connecting member 12 similarly to the aforementioned retaining member 10 and its head portion 16b engaging with the end faces of the connecting member 12 and the rising portion $a_2''$ in a riding manner thereby to prevent the second connecting member 12 from coming out of the rising portion $a_2''$.

Reference numeral 16b' indicates a retaining portion, which is formed in the head portion 16b of the aforementioned retaining member 16 and at which a tool can be retained to rotate the retaining member 16.

As a result, by removing that retaining member 16 to loosen the bolt 15 and by sideway pulling out the outer member $a_3$, this member $a_3$ is removed from the rising portion $a_2''$ of the intermediate member $a_2$.

Then, by connecting again the second connecting member 12 of the outer member $a_3$ to the rising portion $a_2''$ with the fitting position being made different from the initial state, the positional relationship of the outer member $a_3$ with the intermediate member $a_2$ is changed in the sideway direction (Fig. 3.).

In the steering handlebars thus constructed, therefore, by rotating the inner member $a_1$ back and forth thereby to change the positional relationship of the first connecting member 2 with the upper bracket 3, the intermediate member $a_2$ and the outer member $a_3$ are displaced back and forth so that the position of the grip 11 is adjusted back and forth, and up and down.

Moreover, by changing the positional relationship of the intermediate member $a_2$ with the inner member $a_1$ in the horizontal plane, the outer member $a_3$ is displaced inward and outward together with the intermediate member $a_2$ so that the position of the grip 11 is changed inwardly and outwardly.

Namely, the opening angle of the handle, i.e., the width of the handle lever $a$ can be resultantly adjusted.

Still moreover, by changing the positional relationship of the outer member $a_3$ with the intermediate member $a_2$ in the sideway direction, the position of the grip 11 is adjusted up and down.

As has been described hereinbefore, by changing solely or mutually the positional relationships among the respective structural members $a_1$, $a_2$ and $a_3$, the shape of the handle lever $a$ is changed, and the position of the grip 11 is adjusted, whereby a desired riding position can be taken.

Incidentally, since the connection structures between the inner and the intermediate members $a_1$ and intermediate $a_1$ and $a_2$ and between the intermediate and outer members $a_2$ and $a_3$ comprise the serrated fittings, it is possible to easily carry out identical positional changes of the second and third members $a_2$ and $a_3$ at both the right and left sides of the handle lever $a$ merely by remembering the number of such teeth of the serrations as have been shifted when those members $a_1$, $a_2$ and $a_3$ had their positions changed.

Needless to say, it is also enabled by the serration fittings to prohibit the rotations of the intermediate and outer members $a_2$ and $a_3$ at their attached states.

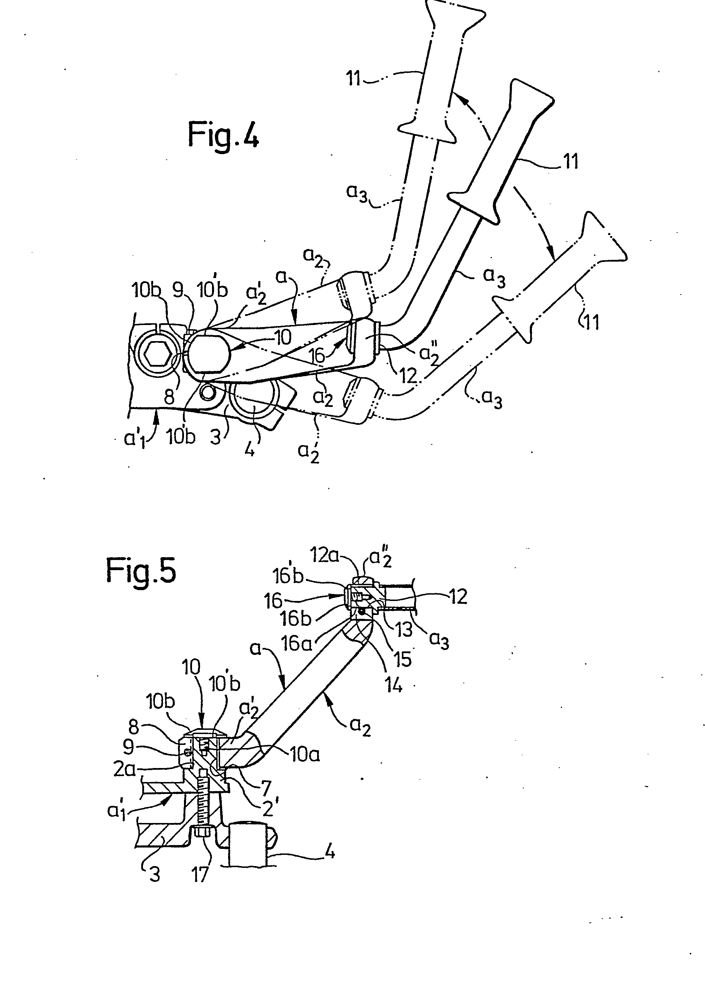

The second embodiment of the present invention will now be described with reference to Figs. 4 and 5.

According to this second embodiment, the inner member $a_1'$, the first connecting member 2' and other portions are made integral, and the first connecting member 2' itself is fixed to the upper bracket 3 by means of a bolt 17. The portions other than the aforementioned

ones are made to have the same construction as that of the first embodiment.

Therefore, the portions having the same construction are indicated at the same reference characters, and their explanations are omitted.

Here, in the second embodiment, the positional relationship of the inner member $a'$ with respect to the upper bracket 3 is not adjustable. The positional relationship, however, between the intermediate and outer members $a_2$ and $a_3$ can be changed as described in the first embodiment.

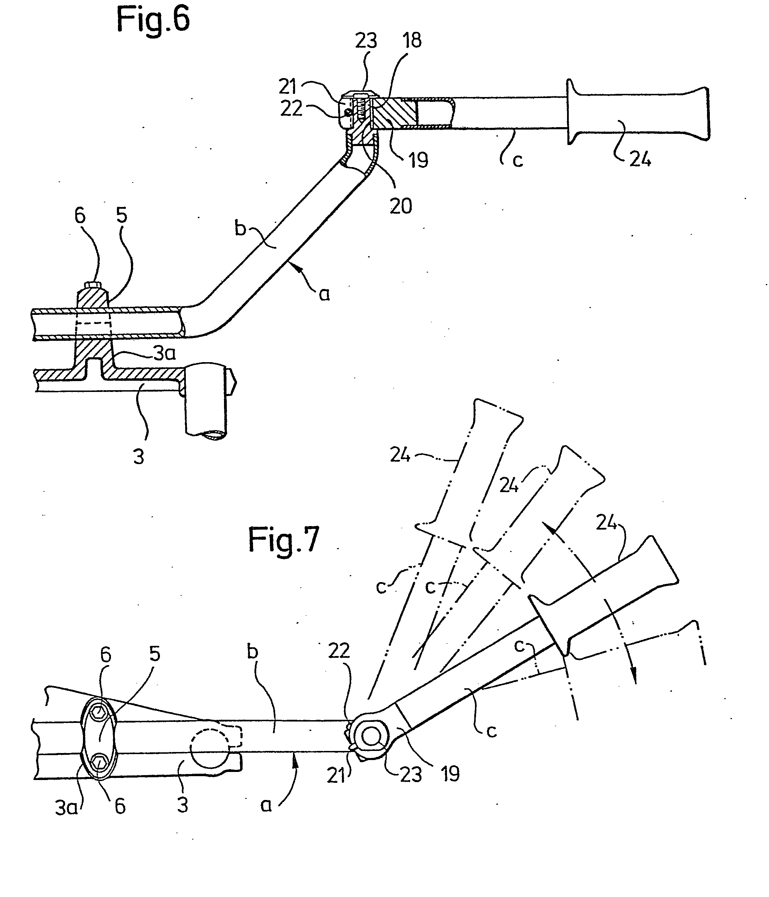

The third embodiment of the present invention will now be described with reference to Figures 6 and 7.

This third embodiment is constructed such that an inner member $b$ has an integral structure, in which the inner and intermediate members $a_1$ and $a_2$ of the first embodiment are made of a single pipe and such that there is connected to the inner member $b$ an outer member $c$ which corresponds to the outer member $a_3$ of the first embodiment.

The aforementioned inner member $b$ is so clamped between the holding portion formed on the upper surface of the upper bracket 3 and the holding member 5 fastened to the holding portion 3a by means of the bolts 6 that it can be rotated back and forth.

On the other hand, the connecting structure between the aforementioned inner and outer members $b$ and $c$ comprises the serrated fitting similar to the foregoing two embodiments, and the outer member $c$ is connected to the inner member $b$ such that their positional relationship in the horizontal plane can be changed.

More specifically, the inner member b is formed at its upper (outer) end with a serration portion 18, in which is fitted a third connecting member 19 formed or fixed to the base portion of the outer member c.

That third connecting member 19 is formed with a fitting hole 20, in which the serrated portion 18 is fitted and which is partially opened to the outside through a slit 21 so that the fitting of the serrated portion 18 thereby is fastened or loosened by means of a bolt 22 which is screwed to ride on both sides of said slit 21.

On the other hand, the outer member c is prevented from coming out of the first member b by means of a retaining member 23 similar. to the foregoing two embodiments.

Incidentally, reference numeral 24 appearing in Figures 6 and 7 indicate a grip which is attached to the rear (outer) end of the outer member c.

In the third embodiment thus constructed, by rotating the inner member b back and forth thereby to change its positional relationship with respect to the upper bracket 3, the outer member c is displaced back and forth so that the position of the grip 24 is changed back and forth, and up and down to adjust the height of the handle.

By changing the positional relationship of the outer member c with respect. to the inner member b in the horizontal plane, the grip 24 is displaced inwardly and outwardly to adjust the opening expent, i.e. the width of the handle.

CLAIMS:

1. Handlebars for two-wheel and three-wheel vehicles, in particular for motor cycles, comprising two symmetrically arranged handle levers ($a$), characterised in that each handle lever consists of a plurality of individual members ($a_1$, $a_1'$, $b$, $a_2$, $a_3$, $c$), which are adjustably interconnected such that the mutual positional relationship of these members can be chnaged in order to adjust at least height and width of said handle lever.

2. Handlebars according to claim 1, characterised in that each hand lever ($a$), has an inner member ($a_1$, $a_1'$, $b$) and an outer member ($a_3$, $c$) each of said members being adjustably mounted.

3. Handlebars according to claim 1 or 2, characterised in that an additional intermediate member ($a_2$), is provided, which has its inner end portion ($a_2'$) adjustably connected to said inner member ($a_1$, $a_1'$, $b$) and has its outer end portion connected to said outer member ($a_3$, $c$).

4. Handlebars according to claim 2, characterised in that said inne member ($a_1$, $a_1'$, $b$) is adjustable about a general horizontal axis and that said outer member ($a_3$, $c$) is adjustable about a general vertical axis.

5. Handlebars according to claim 3, characterised in that said inner end portion ($a_2'$) of said intermediate member ($a_2$) is adjustable about a general vertical axis.

6. Handlebars according to claim 1 or 2, characterised in that the inner member ($b$) has its free end portion connected to the outer member ($c$).

7. Handlebars according to one of claims 1-6, characterised in that between the inner end portion $(a_2')$ of the intermediate member $(a_2)$ and the outer end portion of the inner member $(a_1, a_1')$ there is interposed a first connecting member (2, 2').

8. Handlebars according to one of claims 1-7, characterised in that between the inner end portion of the outer member $(a_3, c)$, and the outer end portion of the intermediate member $(a_2)$, there is interposed a second connecting member (12).

9. Handlebars according to claim 6, characterised in that said inner member $(b)$ and said outer member $(c)$ are connected to each other by means of a third connecting member (19).

10. Handlebars according to one of claims 7-9, characterised in that each connecting member (2, 12, 19) has a serrated portion $(2a; 12a; 18)$ to which the end portion of the respective members $(a2; a3; c)$ is fitted, said serration fittings preventing any undesired rotational movement of said intermediate and/or outer members, when in clamping condition.

Fig.2

Fig.1

Fig.3

0053667

## Fig.4

## Fig.5

0053667

Fig.6

Fig.7

0053667

European Patent
Office

**EUROPEAN SEARCH REPORT**

Application number

EP 81 10 8048

## DOCUMENTS CONSIDERED TO BE RELEVANT

| Category | Citation of document with indication, where appropriate, of relevant passages | Relevant to claim |
|---|---|---|
| XY | FR - A - 373 621 (MIROVITCH) <br> * Complete document * | 1-4, 6-10 |
| X | FR - A - 395 179 (CONTAMAIN) <br> * Figures 3,4; page 1, lines 45-55 * | 10 |
| Y | GB - A - 395 697 (MOORE) <br> * Figure 1; page 2, lines 59-70 * | 6,9 |

CLASSIFICATION OF THE APPLICATION (Int. Cl. 3)

B 62 K 21/16

TECHNICAL FIELDS SEARCHED (Int.Cl. 3)

B 62 K

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims |
|---|---|

| Place of search | Date of completion of the search | Examiner |
|---|---|---|
| The Hague | 09-02-1982 | GEMMELL |

EPO Form 1503.1  06.78